# EUROPEAN PATENT SPECIFICATION

(11) **EP 3 543 549 B1**
(45) Date of publication and mention of the grant of the patent: **30.11.2022**
(21) Application number: 19165049.8
(22) Date of filing: 25.03.2019
(51) Int. Cl.: F16B 5/02, E04F 13/08, F16B 43/00

(54) **AN IMPROVED LOCK WASHER**
VERBESSERTE SICHERUNGSSCHEIBE
RONDELLE DE VERROUILLAGE AMÉLIORÉE

(30) Priority: 23.03.2018 GB 201804728
(43) Date of publication of application: 25.09.2019
(73) Proprietor: Masonry Support Systems Limited, Derbyshire DE11 9EU (GB)
(72) Inventor: COYLE, Sean, Cookstown County Tyrone BT80 9DG (GB)
(74) Representative: Hanna, John Philip

(56) References cited:
- GB-A- 2 234 540
- GB-A- 2 288 831
- GB-A- 2 339 219
- GB-A- 2 535 510
- US-A1- 2011 061 337
- Anonymous: "IG Masonry Support", , 1 June 2016 (2016-06-01), pages 1-48, XP055604896, Retrieved from the Internet: URL:http://igmasonrysupport.com/wp-content /uploads/2017/01/IGMS-product-brochure.pdf [retrieved on 2019-07-12]

## Description

The present invention is directed towards mounting systems for masonry support lintels and in particular to an improved lock washer for use in such a mounting system.

Traditional masonry support lintels are a well-known feature of the construction industry for supporting masonry above openings in walls of buildings. These traditional lintels rest on both sides of a wall above a door/ window opening for structurally supporting the masonry above the opening.

When used over window and door openings, lintel solutions exist where brick slips i.e. bricks cut to an L-shape to reduce their weight can be glued to perforated and non-perforated fascia and soffit portions of the lintel to blend in with the surrounding building facade. This avoids onsite building of the bricks onto the fascia and soffit of a lintel necessary to improve the aesthetic appearance of the building facade.

Masonry support systems other than lintels are also required in buildings to accommodate the effects of moisture, thermal fluctuation, loading, ground movement and settlement. The outer leaf of a cavity wall over a certain height must be provided with masonry support to comply with certain building regulations. This addresses the problems created by the masonry being unsupported from ground level. Basically, the new generation of masonry support systems are manufactured from steel and are bolted at predetermined intervals to a structural support such as a precast concrete member or steel structural support frame on an internal leaf of a cavity wall or an internal structural support member of a building structure. The masonry support systems protrude outwards therefrom providing structural support to the outer leaf or outer façade of the cavity wall or building structure, often bricks. They allow the design of horizontal joints for vertical movement, reduce the risk of stress fracturing, and reduce the issues of differential movement.

When these types of masonry supports, which are fixed to the internal structural support member, are used over openings in the outer façade or indeed in overhang projecting portions of the outer facade, it is preferred to provide a brick/masonry façade for the soffit, especially where the buildings are in public places. Other systems exist for suspending brick from the underside of masonry support but they require bricks to be predrilled and hung from rods or heavy precast suspended units to be bolted in place.

A problem exists in relation to providing support for masonry appended from a soffit formed by a masonry support, for example a window opening below a masonry support at an elevated height in a multi-storey building. The solution is a system connected to the internal structural support member in the same way as the masonry support using brackets bolted to the structural support member at spaced horizontal intervals to one another for supporting a shelf. One design has a shelf detachably mounted to the bracket and another design has the shelf permanently welded to the bracket. The shelf has an underslung fascia and soffit carrying a brick slip to provide a masonry facade. These factory-built products save significant time on site in terms of build and install, are lightweight, customisable and hide the steel with no onsite brick cutting required.

One such existing mounting system has a bracket with a slot having slot engagement means formed on two mutually opposing vertical walls of the slot and a cooperating lock washer having a main body for resting against the planar surface of the bracket around the slot and a protrusion protruding from the main body of the lock washer to fit into the slot. Two corresponding vertical surfaces of the protrusion have a cooperating engagement means for interacting with the slot engagement means providing vertical adjustment for the bracket when the lock washer is mounted on a fixing member such as a screw by a lock nut to hold the bracket in place. Whilst this provides vertical adjustment for the bracket, there is little room for horizontal manoeuvre for the bracket relative to the fixing member. This has been found to be a major installation problem especially in the embodiment where the brackets are welded to the masonry support shelf.

GB2234540 A discloses a lock washer, comprising: a body; a protrusion disposed on one face of the body, the protrusion being configured to be disposable in a corresponding slot of a bracket; an engagement means disposed on the protrusion, the engagement means being configured to be engageable with the slot of the bracket and being capable of holding the body stationary with respect to the bracket.

US2011/061337 A1 discloses a lock washer, comprising: a body; a protrusion disposed on one face of the body, the protrusion being configured to be disposable in a corresponding slot of a bracket; an engagement means disposed on the protrusion, the engagement means being configured to be engageable with the slot of the bracket and being capable of holding the body stationary with respect to the bracket.

It is an object of the present invention to obviate or mitigate the problem of inflexibility relating to lateral positional adjustment existing in current mounting systems for supporting masonry support systems of the type outlined above.

Accordingly, the present invention provides a lock washer, comprising:
a body;
a protrusion disposed on one face of the body, the protrusion being configured to be disposable in a corresponding slot of a bracket;
an engagement means disposed on the protrusion, the engagement means being configured to be engageable with the slot of the bracket and hold the body stationary with respect to the bracket; the engagement means of the protrusion allowing vertical adjustment of the lock washer relative to the bracket and
a slotted hole disposed in the body, the slotted hole being configured to admit a shaft of a bracket fixing means therethrough so as to allow lateral movement of the body relative to the shaft while the shaft is admitted through the slotted hole. The slotted hole has a width greater than a diameter of the shaft so that horizontal/lateral movement of the diameter of the shaft is possible within the slotted hole.

Ideally, the shaft is a cylindrical shaft.

Ideally, the bracket fixing means is a bracket fixing bolt.

Preferably, the bracket is supported on a bracket support means.

Ideally, the bracket support means is a structural support such as a wall or frame.

Preferably, the cylindrical shaft has a first end formed for fixing in a bracket support means and a second end formed for receiving a fixing means for fastening the lock washer onto the bracket.

According to the invention the body having this slotted hole so that it is wider than the shaft diameter means that the bracket and lock washer can now move left or right slightly of the fixing position. This allows a degree of lateral/horizontal adjustment for the bracket and lock washer to circumvent any installation/mounting problems encountered in bespoke installation situations. This is especially important with welded masonry support systems where there is no adjustment in the system as the whole masonry support system is welded together.

Ideally, the protrusion engagement means is provided by a plurality of teeth.

Preferably, the plurality of teeth are disposed in one row on one side of the protrusion.

Preferably, the plurality of teeth are disposed in rows on opposite sides of the protrusion.

Ideally, the plurality of teeth are disposed in two parallel rows on opposite sides of the protrusion.

Preferably, the slot having slot engagement means disposed thereon, the engagement means being configured to engage with the engagement means of the protrusion and hold the body stationary with respect to the bracket.

According to the invention, the engagement means of the slot and/or the engagement means of the protrusion of the lock washer allow vertical adjustment of the lock washer relative to the bracket.

Ideally, the slot engagement means is provided by a plurality of teeth.

Preferably, the plurality of teeth are disposed in one row on one side of the slot.

Preferably, the plurality of teeth are disposed in rows on opposite sides of the slot.

Ideally, the plurality of teeth are disposed in two parallel rows on opposite sides of the slot.

Preferably, the slotted hole allows lateral movement of the body in a direction perpendicular to a length of the one or more rows of the plurality of teeth.

Ideally, the protrusion having a quadrangular shape.

Preferably, the body having a quadrangular shape.

Ideally, the body having a rectangular shape.

Preferably, the protrusion having a rectangular shape.

Ideally, the protrusion having a width less than the width of the body.

Preferably, the protrusion having a height equal to the height of the body.

Ideally, the protrusion having a height equal to the height of the body and the protrusion having a width less than the width of the body.

Preferably, the lock washer comprises a cube/cuboid body portion and a cube/cuboid protrusion wherein the cube/cuboid protrusion having a height equal to the height of the cube/cuboid body and the cube/cuboid protrusion having a width less than the width of the cube/cuboid body.

Preferably, the one or more rows of the plurality of teeth are disposed along the height of the protrusion.

Ideally, the one or more rows of the plurality of teeth are disposed along the heightwise direction of the one or more opposite vertical projecting surfaces of the cube/cuboid protrusion.

Preferably, the slotted hole has a height slightly greater than a diameter of the shaft/shank at or about the centre of the slotted hole so that no vertical movement of the diameter of the shaft/shank is possible within the slotted hole.

According to the invention, the slotted hole has a width greater than a diameter of the shaft/shank so that horizontal/lateral movement of the diameter of the shaft/shank is possible within the slotted hole.

Ideally, the protrusion has a first thickness equal to a depth of the slot of the bracket and the body has a second thickness greater than the first thickness.

Preferably, the slotted hole is disposed at or about a centre of the protrusion.

Ideally, the protrusion is disposed on the face of the rectangular body facing the bracket.

Ideally, a face of the body of the lock washer opposite the protrusion is configured to receive a fastener to push the body of the lock washer towards the bracket and fasten the lock washer to the bracket.

Accordingly, the present invention also provides a mounting system according to claim 12.

Ideally, the shaft is a cylindrical shaft.

Preferably, the shaft has a first end formed for fixing in a bracket support means and a second end formed for receiving a fixing nut for fastening the lock washer onto the bracket.

The body having this slotted hole so that it is wider than the shaft diameter means that the bracket and lock washer can now move left or right slightly of the fixing position. This allows a degree of lateral/horizontal adjustment for the bracket and lock washer to circumvent any installation/mounting problems encountered in bespoke installation situations. This is especially important with welded masonry support systems where there is no adjustment in the system as the whole masonry support system is welded together.

Ideally, the protrusion engagement means is provided by a plurality of teeth.

Preferably, the plurality of teeth are disposed in one row on one side of the protrusion.

Preferably, the plurality of teeth are disposed in rows on opposite sides of the protrusion.

Ideally, the plurality of teeth are disposed in two parallel rows on opposite sides of the protrusion.

Preferably, the slot having slot engagement means disposed thereon, the engagement means being configured to engage with the engagement means of the protrusion and hold the body stationary with respect to the bracket.

Ideally, the engagement means of the slot and/or, according to the invention, the engagement means of the protrusion of the lock washer allow vertical adjustment of the lock washer relative to the bracket.

Ideally, the slot engagement means is provided by a plurality of teeth.

Preferably, the plurality of teeth are disposed in one row on one side of the slot.

Preferably, the plurality of teeth are disposed in rows on opposite sides of the slot.

Ideally, the plurality of teeth are disposed in two parallel rows on opposite sides of the slot.

Preferably, the slotted hole allows lateral movement of the body in a direction perpendicular to a length of the one or more rows of the plurality of teeth.

Ideally, the protrusion having a quadrangular shape.

Preferably, the body having a quadrangular shape.

Ideally, the body having a rectangular shape.

Preferably, the protrusion having a rectangular shape.

Ideally, the protrusion having a width less than the width of the body.

Preferably, the protrusion having a height equal to the height of the body.

Ideally, the protrusion having a height equal to the height of the body and the protrusion having a width less than the width of the body.

Preferably, the lock washer comprises a cube/cuboid body portion and a cube/cuboid protrusion wherein the cube/cuboid protrusion having a height equal to the height of the cube/cuboid body and/or the cube/cuboid protrusion having a width less than the width of the cube/cuboid body.

Preferably, the one or more rows of the plurality of teeth are disposed along the height of the protrusion.

Ideally, the one or more rows of the plurality of teeth are disposed along the heightwise direction of the one or more opposite vertical projecting surfaces of the cube/cuboid protrusion.

Preferably, the slotted hole has a height slightly greater than a diameter of the shank at or about the centre of the slotted hole so that no vertical movement of the diameter of the shank is possible within the slotted hole.

The slotted hole has a width greater than a diameter of the shank so that horizontal/lateral movement of the diameter of the shank is possible within the slotted hole.

Ideally, the protrusion has a first thickness equal to a depth of the slot of the bracket and the body has a second thickness greater than the first thickness.

Preferably, the slotted hole is disposed at or about a centre of the protrusion.

Ideally, the protrusion is disposed on the face of the rectangular body facing the bracket.

Ideally, a face of the body of the lock washer opposite the protrusion is configured to receive a fastener to push the body of the lock washer towards the bracket and fasten the lock washer to the bracket.

The invention will now be described with reference to the accompanying drawings which shows by way of example only one embodiment of an apparatus in accordance with the invention:-
Figure 1 is a top plan view of a lock washer according the present invention;
Figure 2 is a perspective view of a lock washer in Figure 1;
Figure 3 is a first side view of a lock washer according to the present invention;
Figure 4 is a detailed view of how a plurality of teeth of an engagement portion would be arranged on either the protrusion of the lock washer or the slot of the bracket that receives the lock washer according to the present invention;
Figure 5 is a perspective view of a lock washer in situ within the slot of a receiving bracket according to the present invention;
Figure 6 is a front plan view of a lock washer in situ within the slot of a receiving bracket according to the present invention;

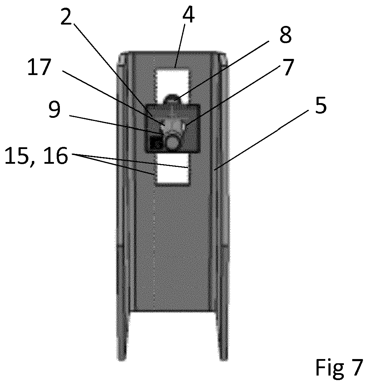

Figure 7 is a perspective view of a lock washer in situ within the slot of a receiving bracket, the lock washer being penetrated by a fastening means according to the present invention;

In the drawings, a lock washer indicated generally by the reference numeral 1 is shown comprising a body 2; a protrusion 3 disposed on one face of the body 2, the protrusion 3 being configured to be disposed in a corresponding slot 4 of a bracket 5; an engagement portion 6 disposed on the protrusion 3, the engagement portion 6 being configured to engage with the slot 4 of the bracket 5 and hold the body 2 stationary with respect to the bracket 5; and a slotted hole 7 disposed in the body 2, the slotted hole 7 being configured to admit a shaft 8 of a bracket fixing apparatus 9 therethrough so as to allow lateral movement of the body 2 relative to the shaft 8 while the shaft 8 is admitted through the slotted hole 7.

The shaft 8 is a cylindrical shaft 8. The cylindrical shaft 8 has a first end 10 formed for fixing in a bracket support apparatus (not shown) and a second end formed for receiving a fixing nut 9 for fastening the lock washer 1 onto the bracket 5.

The body 2 having this hole 7 slotted so that it is wider than the shaft 8 diameter enables the bracket 5 and lock washer 1 to move left or right slightly of the fixing position. This allows a degree of lateral/horizontal adjustment for the bracket 5 and lock washer 1 to circumvent any installation/mounting problems encountered in bespoke installation situations. This is especially important with welded masonry support systems where there is no adjustment in the system as the whole masonry support system is welded together.

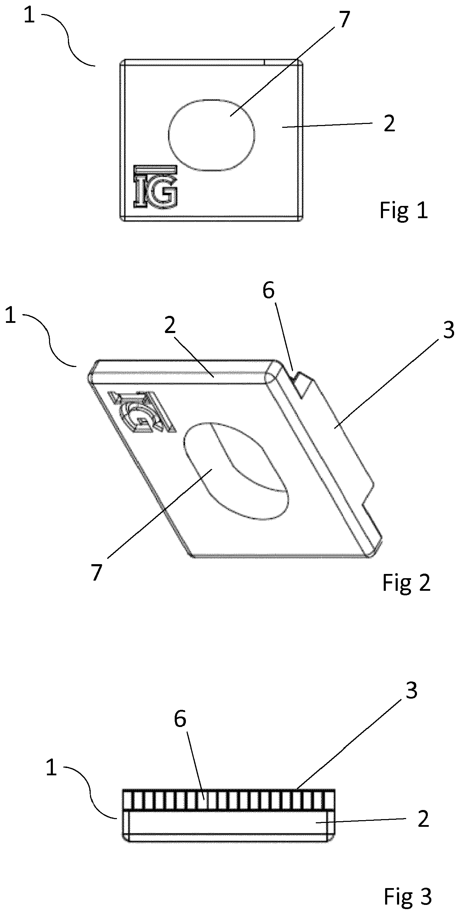

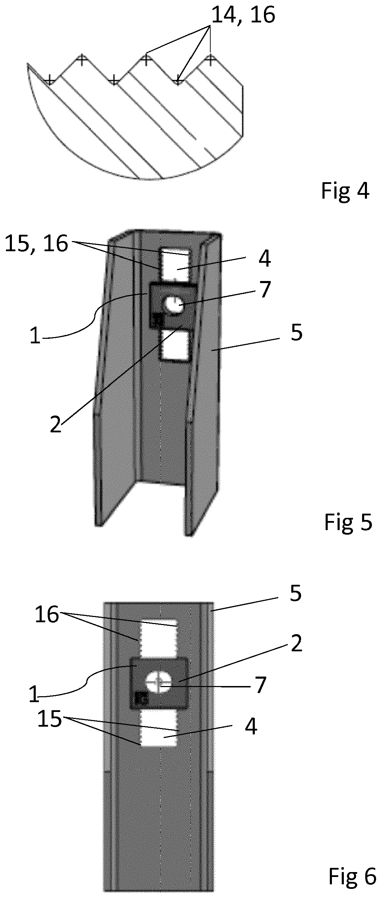

The protrusion engagement portion 6 is provided by a plurality of teeth 14, see especially Figures 3 and 4. The plurality of teeth 14 are disposed in one row on one side of the protrusion 6. The plurality of teeth 14 are disposed in rows on opposite sides of the protrusion 6. The plurality of teeth 14 are disposed in two parallel rows on opposite sides of the protrusion 6.

The slot 4 having slot engagement portion 15 disposed thereon, the engagement portion 15 being configured to engage with the engagement portion 6 of the protrusion 3 and hold the body 2 stationary with respect to the bracket 5. The engagement portion 15 of the slot and/or the engagement portion 6 of the protrusion 3 of the lock washer 1 allow vertical adjustment of the lock washer 1 relative to the bracket 5. The slot engagement portion 15 is provided by a plurality of teeth 16. The plurality of teeth 16 are disposed in one row on one side of the slot 4. The plurality of teeth 16 are disposed in rows on opposite sides of the slot 4. The plurality of teeth 16 are disposed in two parallel rows on opposite sides of the slot 4. The slotted hole 7 allows lateral movement of the body 2 in a direction perpendicular to a length of the one or more rows of the plurality of teeth 16.

The protrusion 3 having a quadrangular shape. The body 2 having a quadrangular shape. The body 2 having a rectangular shape. The protrusion 3 having a rectangular shape. The protrusion 3 having a width less than the width of the body 2. The protrusion 3 having a height equal to the height of the body 2. The protrusion 3 having a height equal to the height of the body 2 and the protrusion 3 having a width less than the width of the body 2. The lock washer 1 comprises a cube/cuboid body 2 portion and a cube/cuboid protrusion 3 wherein the cube/cuboid protrusion 3 having a height equal to the height of the cube/cuboid body 2 and the cube/cuboid protrusion 3 having a width less than the width of the cube/cuboid body 2.

The rows of the plurality of teeth 14 are disposed along the height of the protrusion 3. The one or more rows of the plurality of teeth 14 are disposed along the heightwise direction of the one or more opposite vertical projecting surfaces of the cube/cuboid protrusion 3.

The slotted hole 7 has a height slightly greater than a diameter of the shank 8 at or about the centre of the slotted hole 7 so that no vertical movement of the diameter of the shank is possible within the slotted hole 7. The slotted hole 7 has a width greater than a diameter of the shank 8 so that horizontal/lateral movement of the diameter of the shank 8 is possible within the slotted hole 7.

The protrusion 3 has a first thickness equal to a depth of the slot 4 of the bracket 5 and the body 2 has a second thickness greater than the first thickness. The slotted hole 7 is disposed at or about a centre of the protrusion 3. The protrusion 3 is disposed on the face of the rectangular body facing the bracket 5.

A face of the body 2 of the lock washer 1 opposite the protrusion 3 is configured to receive a fastener to push the body 2 of the lock washer 1 towards the bracket 5 and the protrusion 3 into the slot 4 and fasten the lock washer 1 to the bracket 5.

The present invention also provides a mounting system, comprising the bracket 5, comprising the slot 4 configured to admit a shank 8 through the bracket 5. A lock washer 1, comprising a body 2, a protrusion 3 disposed on one face of the body 2. The protrusion 3 being configured to be disposed in a corresponding slot 4 of the bracket 5. An engagement portion 6 disposed on the protrusion 3. The engagement portion 6 being configured to engage with the slot 4 of the bracket 5 and hold the body 2 stationary with respect to the bracket 5; and a slotted hole 7 disposed in the body 2. The slotted hole 7 is configured to admit a shaft 8 of a bracket fixing apparatus 9 therethrough so as to allow lateral movement of the body 2 relative to the shaft while the shaft is admitted through the slotted hole. A fastener 17 is disposed on the shank 8 to push the lock washer 1 towards the bracket 5 and fasten the lock washer 1 to the bracket 5.

The shaft 8 is a cylindrical shaft 8. The cylindrical shaft 8 has a first end 10 formed for fixing in a bracket support apparatus and a second end formed for receiving a fixing nut 17 for fastening the lock washer 1 onto the bracket 5. The body 2 having this hole 7 slotted so that it is wider than the shaft 8 diameter enables the bracket 5 and lock washer 1 to move left or right slightly of the fixing position. This allows a degree of lateral/horizontal adjustment for the bracket 5 and lock washer 1 to circumvent any installation/mounting problems encountered in bespoke installation situations. This is especially important with welded masonry support systems where there is no adjustment in the system as the whole masonry support system is welded together.

The protrusion engagement portion 6 is provided by a plurality of teeth 14. The plurality of teeth 14 are disposed in one row on one side of the protrusion 3. The plurality of teeth 14 are disposed in rows on opposite sides of the protrusion 3. The plurality of teeth 14 are disposed in two parallel rows on opposite sides of the protrusion 3. The slot 4 having a slot engagement portion 15 disposed thereon, the engagement portion 15 being configured to engage with the engagement portion 6 of the protrusion 3 and hold the body 2 stationary with respect to the bracket 5. The engagement portion 15 of the slot 4 and/or the engagement portion 6 of the protrusion 3 of the lock washer 1 allow vertical adjustment of the lock washer 1 relative to the bracket 5.

The slot engagement portion 15 is provided by a plurality of teeth 16. The plurality of teeth 16 are disposed in one row on one side of the slot 4. The plurality of teeth 16 are disposed in rows on opposite sides of the slot 4. The plurality of teeth 16 are disposed in two parallel rows on opposite sides of the slot 4.

The slotted hole 7 allows lateral movement of the body 2 in a direction perpendicular to a length of the one or more rows of the plurality of teeth 16. The protrusion 3 having a quadrangular shape. The body 2 having a quadrangular shape. The body 2 having a rectangular shape. The protrusion 3 having a rectangular shape. The protrusion 3 having a width less than the width of the body 2. The protrusion 3 having a height equal to the height of the body 2. The protrusion 3 having a height equal to the height of the body 2 and the protrusion 3 having a width less than the width of the body 2. The lock washer 1 comprises a cube/cuboid body 2 portion and a cube/cuboid protrusion 3 wherein the cube/cuboid protrusion 3 having a height equal to the height of the cube/cuboid body 2 and the cube/cuboid protrusion 3 having a width less than the width of the cube/cuboid body 2.

The rows of the plurality of teeth 14 are disposed along the height of the protrusion 3. The one or more rows of the plurality of teeth 14 are disposed along the heightwise direction of the one or more opposite vertical projecting surfaces of the cube/cuboid protrusion 3.

The slotted hole 7 has a height slightly greater than a diameter of the shank 8 at or about the centre of the slotted hole 7 so that no vertical movement of the diameter of the shank 8 is possible within the slotted hole 7. The slotted hole 7 has a width greater than a diameter of the shank 8 so that horizontal/lateral movement of the diameter of the shank 8 is possible within the slotted hole 7.

The protrusion 3 has a first thickness equal to a depth of the slot 4 of the bracket 5 and the body 2 has a second thickness greater than the first thickness. The slotted hole 7 is disposed at or about a centre of the protrusion 3. The protrusion 3 is disposed on the face of the rectangular body 2 facing the bracket 5. A face of the body 2 of the lock washer 1 opposite the protrusion 3 is configured to receive a fastener 17 to push the body 2 of the lock washer 1 towards the bracket 5 and fasten the lock washer 1 to the bracket 5.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

## Claims

1. A lock washer (1), comprising:
a body (2);
a protrusion (3) disposed on one face of the body (2), the protrusion (3) being configured to be disposable in a corresponding slot (4) of a bracket (5); and
an engagement means (6) disposed on the protrusion (3), the engagement means (6) being configured to be engageable with the slot (4) of the bracket (5) and being capable of holding the body (2) stationary with respect to the bracket (5), the engagement means (6) of the protrusion allowing vertical adjustment of the lock washer (1) relative to the bracket (5),
**characterised in that** the lock washer (1) comprises a slotted hole (7) disposed in the body (2), the slotted hole (7) being configured to admit a shaft (8) of a bracket fixing means (9) therethrough so as to allow lateral movement of the body (2) relative to the shaft (8) while the shaft (8) is admitted through the slotted hole (7), and **in that** the slotted hole (7) has a width greater than a diameter of the shaft (8) so that horizontal/lateral movement of the diameter of the shaft (8) is possible within the slotted hole (7).

2. A lock washer (1) as claimed in claim 1, wherein the protrusion engagement means (6) is provided by a plurality of teeth (14).

3. A lock washer (1) as claimed in claim 2, wherein the plurality of teeth (14) are disposed in one or more rows on one or more opposite sides of the protrusion (3).

4. A lock washer (1) as claimed in claim 2 or claim 3, wherein the slotted hole (7) allows lateral movement of the body (2) in a direction perpendicular to a length of the one or more rows of the plurality of teeth (14).

5. A lock washer (1) as claimed in any preceding claim, wherein the protrusion (3) having a quadrangular shape and the body (2) having a quadrangular shape.

6. A lock washer (1) as claimed in any preceding claim, wherein the protrusion (3) having a width less than the width of the body (2).

7. A lock washer (1) as claimed in any preceding claim, wherein the lock washer (1) comprises a cube/cuboid body portion and a cube/cuboid protrusion, the cube/cuboid protrusion having a width less than the width of the cube/cuboid body.

8. A lock washer (1) as claimed in claim 7 when dependent on claim 3, wherein the one or more rows of the plurality of teeth (14) are disposed along the heightwise direction of the one or more opposite vertical projecting surfaces of the cube/cuboid protrusion.

9. A lock washer (1) as claimed in claim 3, wherein the one or more rows of the plurality of teeth (14) are disposed along the height of the protrusion (3).

10. A lock washer (1) as claimed in any preceding claim, wherein the slotted hole has a height slightly greater than a diameter of the shaft (8) at or about the centre of the slotted hole (7) so that no vertical movement of the diameter of the shaft (8) is possible within the slotted hole (7).

11. A lock washer (1) as claimed in any preceding claim, wherein the slotted hole (7) is disposed at or about a centre of the protrusion (3).

12. A mounting system, comprising:
a bracket (5) comprising a slot (4) configured to admit a shaft (8) through the bracket (5);
a lock washer (1) according to any preceding claim;
a bracket fixing means (9) comprising a shaft (8); and
a fastener (17) disposed on the shaft (8) to push the lock washer (1) towards the bracket (5) and fasten the lock washer (1) to the bracket (5).

13. A mounting system as claimed in claim 12, wherein the shaft (8) has a first end (10) formed for fixing in a bracket support means and a second end formed for receiving a fixing nut (17) for fastening the lock washer (1) onto the bracket (5).

14. A mounting system as claimed in claim 12 or 13, wherein the slot (4) having slot engagement means disposed thereon, the engagement means being configured to engage with the engagement means of the protrusion (3) and hold the body (2) stationary with respect to the bracket, the engagement means of the slot (4) and/or the engagement means of the protrusion (3) of the lock washer (1) allow vertical adjustment of the lock washer (1) relative to the bracket (5).

## Patentansprüche

1. Sicherungsscheibe (1), umfassend:
einen Körper (2);
einen Vorsprung (3), der auf einer Seite des Körpers (2) angeordnet ist, wobei der Vorsprung (3) dazu ausgelegt ist, in einem entsprechenden Schlitz (4) einer Halterung (5) angeordnet zu werden; und
ein Eingriffsmittel (6), das an dem Vorsprung (3) angeordnet ist, wobei das Eingriffsmittel (6) dazu ausgelegt ist, mit dem Schlitz (4) der Halterung (5) in Eingriff gebracht zu werden, und in der Lage ist, den Körper (2) in Bezug auf die Halterung (5) ortsfest zu halten, wobei das Eingriffsmittel (6) des Vorsprungs eine vertikale Anpassung der Sicherungsscheibe (1) relativ zur Halterung (5) ermöglicht,
**dadurch gekennzeichnet, dass** die Sicherungsscheibe (1) ein in dem Körper (2) angeordnetes Langloch (7) umfasst, wobei das Langloch (7) dazu ausgelegt ist, einen Schaft (8) eines Halterungsfixiermittels (9) hindurchzulassen, um eine seitliche Bewegung des Körpers (2) relativ zum Schaft (8) zu ermöglichen, während der Schaft (8) durch das Langloch (7) hindurchgelassen wird, und dass das Langloch (7) eine Breite aufweist, die größer als ein Durchmesser des Schafts (8) ist, sodass eine horizontale/seitliche Bewegung des Durchmessers des Schafts (8) innerhalb des Langlochs (7) möglich ist.

2. Sicherungsscheibe (1) gemäß Anspruch 1, wobei das Eingriffsmittel (6) für den Vorsprung durch eine Vielzahl von Zähnen (14) gebildet wird.

3. Sicherungsscheibe (1) gemäß Anspruch 2, wobei die Vielzahl von Zähnen (14) in einer oder mehreren Reihen auf einer oder mehreren gegenüberliegenden Seiten des Vorsprungs (3) angeordnet sind.

4. Sicherungsscheibe (1) gemäß Anspruch 2 oder 3, wobei das Langloch (7) eine seitliche Bewegung des Körpers (2) in einer Richtung rechtwinklig zu einer Länge der einen oder mehreren Reihen der Vielzahl von Zähnen (14) ermöglicht.

5. Sicherungsscheibe (1) gemäß einem der vorhergehenden Ansprüche, wobei der Vorsprung (3) eine viereckige Form aufweist und der Körper (2) eine viereckige Form aufweist.

6. Sicherungsscheibe (1) gemäß einem der vorhergehenden Ansprüche, wobei der Vorsprung (3) eine geringere Breite als die Breite des Körpers (2) aufweist.

7. Sicherungsscheibe (1) gemäß einem der vorhergehenden Ansprüche, wobei die Sicherungsscheibe (1) einen würfel-/quaderförmigen Körperabschnitt und einen würfel-/quaderförmigen Vorsprung umfasst, wobei der würfel-/quaderförmige Vorsprung eine geringere Breite als die Breite des würfel-/quaderförmigen Körpers aufweist.

8. Sicherungsscheibe (1) gemäß Anspruch 7 bei Abhängigkeit von Anspruch 3, wobei die eine oder die mehreren Reihen der Vielzahl von Zähnen (14) entlang der Höhenrichtung der einen oder der mehreren gegenüberliegenden vertikalen Vorsprungsflächen des würfel-/quaderförmigen Vorsprungs angeordnet sind.

9. Sicherungsscheibe (1) gemäß Anspruch 3, wobei die eine oder mehreren Reihen der Vielzahl von Zähnen (14) entlang der Höhe des Vorsprungs (3) angeordnet sind.

10. Sicherungsscheibe (1) gemäß einem der vorhergehenden Ansprüche, wobei das Langloch eine Höhe aufweist, die geringfügig größer als ein Durchmesser des Schafts (8) in oder um die Mitte des Langlochs (7) ist, sodass keine vertikale Bewegung des Durchmessers des Schafts (8) innerhalb des Langlochs (7) möglich ist.

11. Sicherungsscheibe (1) gemäß einem der vorhergehenden Ansprüche, wobei das Langloch (7) in oder um eine Mitte des Vorsprungs (3) angeordnet ist.

12. Befestigungssystem, umfassend:
eine Halterung (5) mit einem Schlitz (4), der dazu ausgelegt ist, einen Schaft (8) durch die Halterung (5) aufzunehmen;
eine Sicherungsscheibe (1) gemäß einem der vorhergehenden Ansprüche;
ein Halterungsfixiermittel (9) mit einem Schaft (8); und
ein Befestigungselement (17), das an dem Schaft (8) angeordnet ist, um die Sicherungsscheibe (1) in Richtung der Halterung (5) zu drücken und die Sicherungsscheibe (1) an der Halterung (5) zu befestigen.

13. Befestigungssystem gemäß Anspruch 12, wobei der Schaft (8) ein erstes Ende (10) aufweist, das zum Fixieren in einem Halterungsträgermittel ausgebildet ist, und ein zweites Ende, das zum Aufnehmen einer Fixiermutter (17) zum Befestigen der Sicherungsscheibe (1) an der Halterung (5) ausgebildet ist.

14. Befestigungssystem gemäß Anspruch 12 oder 13, wobei der Schlitz (4) ein daran angeordnetes Schlitzeingriffsmittel aufweist, wobei das Eingriffsmittel dazu ausgelegt ist, mit dem Eingriffsmittel des Vorsprungs (3) in Eingriff zu kommen und den Körper (2) in Bezug auf die Halterung ortsfest zu halten, wobei das Eingriffsmittel des Schlitzes (4) und/oder das Eingriffsmittel des Vorsprungs (3) der Sicherungsscheibe (1) eine vertikale Anpassung der Sicherungsscheibe (1) in Bezug auf die Halterung (5) ermöglicht.

## Revendications

1. Rondelle de verrouillage (1), comprenant :
un corps (2) ;
une saillie (3) disposée sur une face du corps (2), la saillie (3) étant conçue pour pouvoir être disposée dans une fente (4) correspondante d'un support (5) ; et
un moyen de mise en prise (6) disposé sur la saillie (3), le moyen de mise en prise (6) étant conçu pour pouvoir venir en prise avec la fente (4) du support (5) et pouvant maintenir le corps (2) fixe par rapport au support (5), le moyen de mise en prise (6) de la saillie permettant un ajustement vertical de la rondelle de verrouillage (1) par rapport au support (5),
**caractérisée en ce que** la rondelle de verrouillage (1) comprend un trou allongé (7) situé dans le corps (2), le trou allongé (7) étant conçu pour admettre un arbre (8) d'un moyen de fixation de support (9) à travers celui-ci de sorte à permettre un mouvement latéral du corps (2) par rapport à l'arbre (8) tandis que l'arbre (8) est admis à travers le trou allongé (7), et **en ce que** le trou allongé (7) a une largeur supérieure à un diamètre de l'arbre (8) de sorte qu'un mouvement horizontal/latéral du diamètre de l'arbre (8) soit possible à l'intérieur du trou allongé (7).

2. Rondelle de verrouillage (1) selon la revendication 1, le moyen de mise en prise (6) de saillie étant fourni par une pluralité de dents (14).

3. Rondelle de verrouillage (1) selon la revendication 2, la pluralité de dents (14) étant disposées en une ou plusieurs rangées sur un ou plusieurs côtés opposés de la saillie (3).

4. Rondelle de verrouillage (1) selon la revendication 2 ou la revendication 3, le trou allongé (7) permettant un mouvement latéral du corps (2) dans une direction perpendiculaire à une longueur de la ou des rangées de la pluralité de dents (14).

5. Rondelle de verrouillage (1) selon l'une quelconque des revendications précédentes, la saillie (3) ayant une forme quadrangulaire et le corps (2) ayant une forme quadrangulaire.

6. Rondelle de verrouillage (1) l'une quelconque des revendications précédentes, la saillie (3) ayant une largeur inférieure à la largeur du corps (2).

7. Rondelle de verrouillage (1) selon l'une quelconque des revendications précédentes, la rondelle de verrouillage (1) comprenant une partie de corps cubique/cuboïde et une saillie cubique/cuboïde, la saillie cubique/cuboïde ayant une largeur inférieure à la largeur du corps cubique/cuboïde.

8. Rondelle de verrouillage (1) selon la revendication 7 lorsqu'elle dépend de la revendication 3, la ou les rangées de la pluralité de dents (14) étant disposées le long de la direction de la hauteur de la ou des surfaces en saillie verticales opposées de la saillie cubique/cuboïde.

9. Rondelle de verrouillage (1) selon la revendication 3, la ou les rangées de la pluralité de dents (14) étant disposées le long de la hauteur de la saillie (3).

10. Rondelle de verrouillage (1) selon l'une quelconque des revendications précédentes, le trou allongé ayant une hauteur légèrement supérieure à un diamètre de l'arbre (8) au niveau ou à proximité du centre du trou allongé (7) de sorte qu'aucun mouvement vertical du diamètre de l'arbre (8) ne soit possible à l'intérieur du trou allongé (7).

11. Rondelle de verrouillage (1) selon l'une quelconque des revendications précédentes, le trou allongé (7) étant disposé au niveau ou autour d'un centre de la saillie (3) .

12. Système de montage, comprenant :
un support (5) comprenant une fente (4) conçue pour admettre un arbre (8) à travers le support (5) ;
une rondelle de verrouillage (1) selon l'une quelconque des revendications précédentes ;
un moyen de fixation de support (9) comprenant un arbre (8) ; et
un dispositif de fixation (17) disposé sur l'arbre (8) pour pousser la rondelle de verrouillage (1) vers le support (5) et fixer la rondelle de verrouillage (1) au support (5).

13. Système de montage selon la revendication 12, l'arbre (8) ayant une première extrémité (10) formée pour être fixée dans un moyen d'appui de support et une seconde extrémité formée pour recevoir un écrou de fixation (17) pour fixer la rondelle de verrouillage (1) sur le support (5) .

14. Système de montage selon la revendication 12 ou 13, la fente (4) ayant un moyen de mise en prise de fente disposé sur celle-ci, le moyen de mise en prise étant conçu pour venir en prise le moyen de mise en prise avec la saillie (3) et maintenir le corps (2) fixe par rapport au support, le moyen de mise en prise de la fente (4) et/ou le moyen de mise en prise de la saillie (3) de la rondelle de verrouillage (1) permettant un ajustement vertical de la rondelle de verrouillage (1) par rapport au support (5).
